# EUROPÄISCHE PATENTSCHRIFT

(11) **EP 0 529 454 B1**
(45) Veröffentlichungstag und Bekanntmachung des Hinweises auf die Patenterteilung: **22.01.1997**
(21) Anmeldenummer: 92113968.9
(22) Anmeldetag: 17.08.1992
(51) Int. Cl.: G11B 23/087

(54) **Bandkassette mit mindestens einem Sichtfenster**
Tape cassette with at least one viewing window
Cassette à bande comportant au moins une fenêtre de visualisation

(30) Priorität: 24.08.1991 DE 9110481 U
(43) Veröffentlichungstag der Anmeldung: 03.03.1993
(73) Patentinhaber: BASF Magnetics GmbH, 67059 Ludwigshafen (DE)
(72) Erfinder: Schoettle, Klaus, W-6900 Heidelberg (DE); Eberhard, Joachim, W-7634 Kippenheim (DE); Borck, Gerald-Wolfgang, W-6700 Ludwigshafen (DE)
(74) Vertreter: Langfinger, Klaus-Dieter, Dr.

(56) Entgegenhaltungen:
- EP-A- 0 073 010
- EP-A- 0 197 590
- EP-A- 0 416 579
- GB-A- 2 121 007
- GB-A- 2 142 314
- US-A- 4 949 210
- PATENT ABSTRACTS OF JAPAN vol. 12, no. 16 (P-656) 19. Januar 1988 & JP-A-62 172 583
- PATENT ABSTRACTS OF JAPAN vol. 15, no. 402 (P-1262) 14. Oktober 1991 & JP-A-03 162 787
- PATENT ABSTRACTS OF JAPAN vol. 14, no. 122 (P-1017) 7. März 1990 & JP-A-01 315 089

## Beschreibung

Die Erfindung betrifft ein Verfahren zum Herstellen einer Bandkassette mit mindestens einem Sichtfenster.

Behälter allgemeiner Art und Bandkassetten, im einzelnen Audio-Video- und Daten-Magnetbandkassetten mit Sichtfenstern, sind in vielfältiger Ausführung bekannt.

Zumeist sind die Fenster in dafür vorgesehenen Öffnungen in den Kassettengehäusen eingeschweißt, oder die Fenster sind mit den Gehäusen zusammen im Zweifarben-Spritzguß hergestellt.

Änderungen der Fensterform bedingen beim Zweifarben-Spritzguß aufwendige Werkzeugänderungen oder Neukonstruktionen, die solche Änderungen von vornherein verbieten.

Die eingeschweißten Fenster sind bei undurchsichtigen Gehäusen üblicherweise von der Gehäuserückseite eingeschweißt, um die Schweißstellen unsichtbar zu machen.

Mit der EP-PS 73010 ist eine Kompaktkassette mit einer von der Innenseite in ein undurchsichtiges Gehäuse eingeschweißten Fensteranordnung bekannt.

Es ist mit der EP-PS 233 028 auch bekannt, bei Fenstern von Videokassetten Fensterteile oberhalb von durch Abrieb gefährdeten Stellen mit nur schwach durchsichtiger Aufrauhung zu versehen. Damit werden höchstens punktuelle oder kleinere Fensterbereiche abgedeckt. Bandkassetten mit unterschiedlichen Fenstern sind damit nicht herstellbar.

Es ist Aufgabe der vorliegenden Erfindung, die Herstellung von Bandkassetten mit wenigstens einem Sichtfenster für Fenster verschiedener Größe und/oder Form zu vereinfachen.

Diese Aufgabe wird mit einem Herstellverfahren gemäß Patentanspruch 1 gelöst.

Eine praktische Lösung der Aufgabe ist gegeben, wenn das Gehäuse undurchsichtig ist und der Fensterteil einen Abdeckteil aufweist, der eine der Undurchsichtigkeit des Gehäuses zumindest ähnliche Undurchsichtigkeit besitzt, so daß der Übergangsbereich zwischen Gehäuse und Fensterteil optisch unbestimmbarer wird.

Auf diese Weise ist es vorteilhaft möglich, über eine Änderung der Größe und/oder Form des Abdeckteils die Größe und/ oder Form des transparenten Ausschnitts zwangsläufig mit zu ändern, so daß in Größe und/oder Form völlig verschiedene Sichtfenster entstehen, die vorteilhaft auch die Eigenschaft der Sichtabdeckung der Befestigungsstellen besitzen und/oder die optische Unbestimmbarkeit der Übergangsbereiche zwischen Gehäuse und Fensterteil erzielen.

Dabei bleiben die Umrisse der Fensterteile und damit auch die Ausschnitte in den Gehäusen unverändert, wodurch eine Vielzahl von Fensterformen, genauer Formen des transparenten Ausschnitts des Fensterteils, möglich und wahlweise einsetzbar werden, ohne daß die Umriß-Größen und -Formen der Fensterteile selbst zu ändern wären. Dadurch wird die Herstellung vereinfacht.

Der Abdeckteil des Fensterteils sollte am Außenrand des Sichtfensters oder zumindest in der Nähe des Außenrandes des Fensterteils angeordnet sein. Der Abdeckteil kann im einfachsten Fall auch rahmenförmig sein oder aus Elementen eines Außenrahmens bestehen. Zweckmäßig kann der Abdeckteil dieselbe oder eine ähnliche Farbe besitzen wie ein wenigstens teilundurchsichtiges Kassettengehäuse. Beide Teile, Gehäuse und Fensterteil, können jedoch auch mit Ausnahme des Abdeckteils teilweise oder völlig transparent sein. Es ist jedoch auch möglich, eine Kontrastfarbe zur Gehäusefarbe zu verwenden, z.B. um eine Dreifarbigkeit oder durch geeignete Überdeckung im Außenrandbereich (z.B. bei Druck oder Prägung) auch eine Mehrfarbigkeit zu erreichen.

Der Abdeckteil und damit auch der transparente Ausschnitt des Fensterteils können eine relativ zur Form des (Fenster-) Ausschnitts im Gehäuse geometrisch unregelmäßige oder regelmäßige Form aufweisen. Der äußere Eindruck der Bandkassette und die Sichtbarkeit der darin enthaltenen Teile sind damit in weitem Rahmen variierbar. Herstellbar ist der Fensterteil als Zweifarbenspritzguß-Teil oder z.B. in einer der folgenden Arten.

Der Abdeckteil ist durch Aufdrucken nach Herstellung oder beim Spritzgußvorgang (Inmold-Verfahren) herstellbar. Es ist auch möglich, den Abdeckteil des Fensterteils durch Prägen auszubilden.

Als Befestigungsstellen sind Schweißstellen oder Nietstellen am Gehäuse geeignet, es kann jedoch auch von Klebverbindungsstellen Gebrauch gemacht werden.

An der vom Abdeckteil abgedeckten Rückseite des Fensterteils können zweckmäßig sowohl Schweißwarzen oder -rippen und Nietzapfen bzw. -löcher aber auch Führungselemente für das Band einer Bandkassette zweckmäßig angeordnet sein.

Es ist praktisch auch möglich, sich des Zweifarbenspritzgusses zu bedienen, um den Abdeckteil mittels optisch abdeckender Stoffe undurchsichtig und den transparenten Ausschnitt zumindest leicht durchsichtig auszugestalten. Zur Befestigung können an der Rückseite des Abdeckteils am Fensterteil ausgebildete Schweißrippen bzw. Nietzapfen und/oder Nietlöcher vorgesehen sein. Vorteilhafterweise können an besagter abgedeckter Rückseite auch Führungselemente wie Fortsätze, Rippen usw. für ein Band in einer Bandkassette vorgesehen sein.

Ausführungsformen der Erfindung sind in der Zeichnung dargestellt und nachfolgend beschrieben.

Die Zeichnung stellt dar in
- Figur 1a: eine erfindungsgemäße Kompakt-Kassette mit einem Fenster mit Außenrahmen
- Figur 1b: die Kassette aus Figur 1 mit einem Fenster mit teilweise unterbrochenem Außenrahmen
- Figur 1c: die Kassette aus Figuren 1 und 2 mit einem Fenster mit designsmäßig gestaltetem Außenrahmen
- Figur 2a: eine Kassettenhälfte gemäß Stand der Technik mit eingesetztem Fensterteil in Draufsicht
- Figur 2b: eine Querschnittsansicht gemäß Schnittlinie II-II durch die obere Kassetten-Gehäusehälfte
- Figur 3a: die erfindungsgemäße Kassette symbolisiert durch einen Ausschnitt einer Querschnittszeichnung wie Figur 2b mit von außen eingesetztem Fenster zum Verschweißen
- Figur 3b: wie Figur 3a, jedoch mit von innen eingesetztem Fenster zum Verschweißen
- Figur 3c: wie Figur 3a, jedoch mit von außen eingesetztem Fenster zum Vernieten
- Figur 3d: wie Figur 3a, jedoch mit mehrfach gestuftem Fenster für eine Klebverbindung
- Figur 4: wie Figur 3a, jedoch mit im Zweifarbenguß hergestellter Gehäuse-Fenster-Einheit.

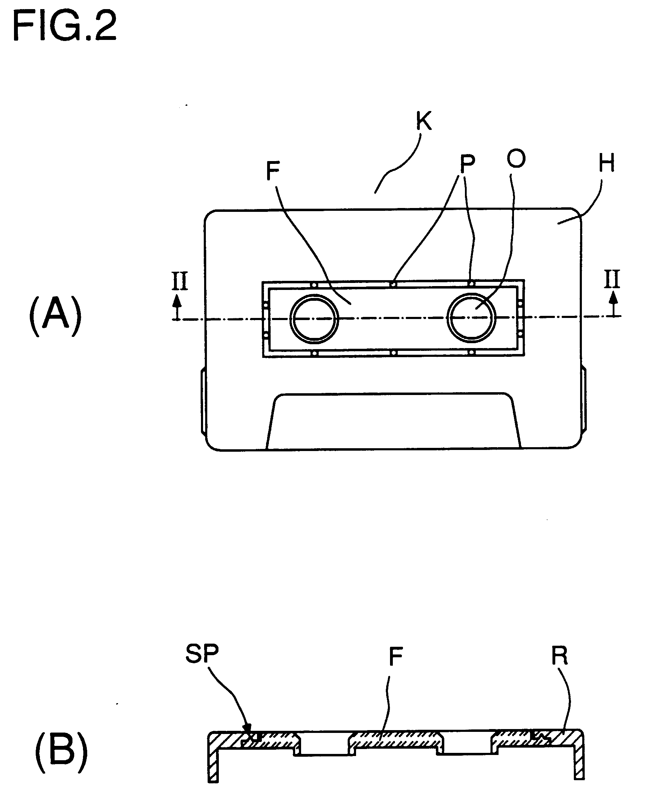

Die Kompakt-Kassette K in Figur 2a besteht aus einem Gehäuse H und einem damit z.B. in Form von Punkten P, beispielsweise Schweißpunkten, verbundenen Fenster F, in dem auch die Öffnungen zum Eintritt der Antriebsdorne vorgesehen sein können. Wie in Figur 2b erkennbar ist, weist das Gehäuse H einen vertieften Rand R auf, auf dem der Außenrand des Fensters F liegt und in dessen Bereich die Befestigungspunkte, in diesem Fall als Schweißwarzen SP dargestellt, liegen. Sind beide Teile Fenster F und Gehäuse nicht durchsichtig, wie im Stand der Technik üblich, das Gehäuse H gefärbt und das Fenster F transparent, sind die Befestigungspunkte P nur vom Inneren des Gehäuse H sichtbar. Von außen ergibt sich ein sauberes Design. Das ändert sich jedoch, sobald beide Teile Gehäuse H und Fenster F voll oder teiltransparent sind, da dann die Befestigungspunkte oder ggf. -flächen wenigstens teilweise sichtbar sind und das Design der Kassette K deutlich beeinträchtigen können.

In Figur la ist eine erfindungsgemäße Kompakt-Kassette 5 dargestellt, im wesentlichen bestehend aus dem Gehäuse 6 und dem damit verbundenen Fenster 7, das ebenfalls Öffnungen 8 für die Antriebsdorne des Geräts enthält. Das Fenster 7 ist gebildet aus einem transparenten Ausschnitt 9 und einem geschlossenen Außenrahmen 10 als Abdeckteil, im folgenden auch als "Sichtabdeckteil" bezeichnet.

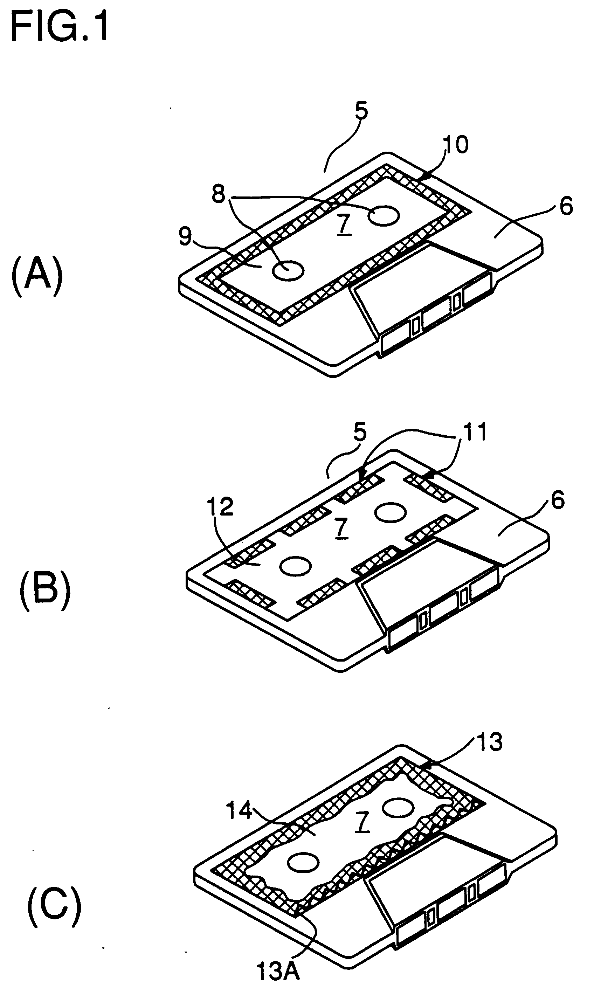

In der Kassette 5 in Figur 1b sind dieselben Teile wie in Figur la bezeichnet. Unterschiedlich ist der Abschnitts-Außenrahmen 11, der den durch die entstandenen Zwischenräume mit äußeren Fortsätzen versehenen transparenten Ausschnitt 12, im folgenden auch als "Transparentteil" bezeichnet, umgibt.

Figur 1c zeigt einen designsmäßig unregelmäßig ausgebildeten Außenrahmen 13, der einen entsprechend geformten Design-Transparentteil 14 umgibt. Wie mit einer Zick-Zack-Linie am unteren Teil des Außenrahmens 13 angedeutet, ist designsmäßig eine regelmäßig dreieckig ausgebildete Rahmenform 13A ebenso realisierbar. In allen Formen soll nur die Abdeckfunktion des Sichtabdeckteils des Fensters 7 erhalten bleiben. Abgedeckt werden sollen davor wie oben erläutert, die Befestigungsstellen und ein Innenrahmen des Gehäuses 6. Die Farbe des Außenrahmens 13 kann der Farbe des Gehäuses 6 fast angepaßt sein oder ihn segah entsprechen.

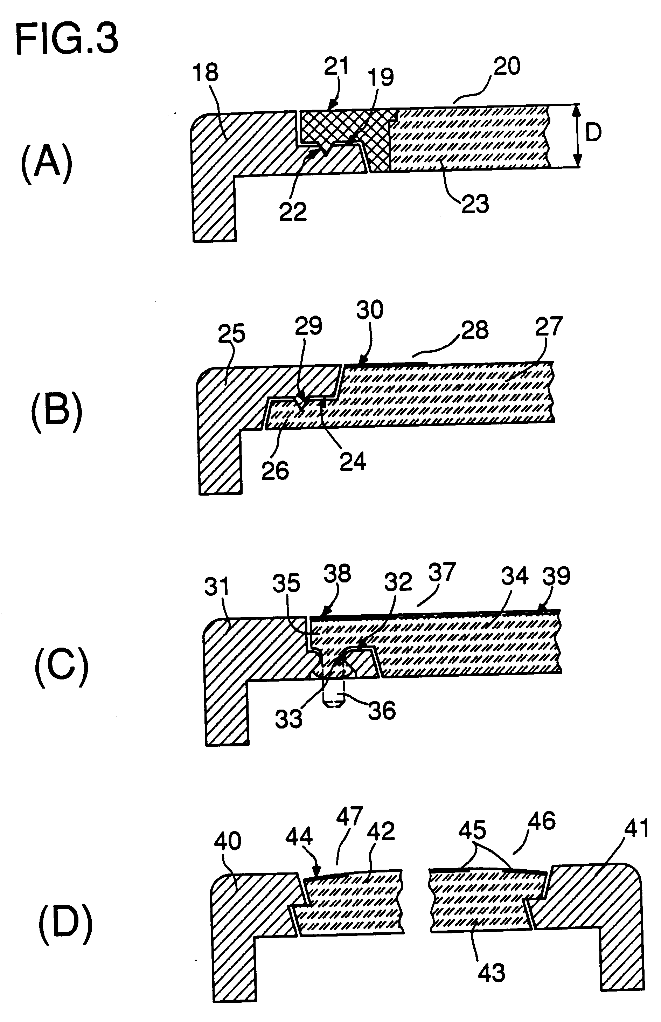

In Figuren 3a bis 3d sind verschiedene Einsetzmöglichkeiten von Fenstern und Gehäuse-Vertiefungen dargestellt. In Figur 3a ist das Gehäuse 18 mit einer nach oben offenen Vertiefung 19 versehen. Das dazugehörige Fenster 20 liegt mit einem an dieser Stelle als Stufe ausgebildeten Sichtabdeckteil 21 und mit einer nach unten gerichteten Schweißwarze 22 in der Vertiefung 19 und wird mittels Schweißens daran befestigt. Der Transparentteil 23 schließt an den Sichtabdeckteil 21 an, der z.B. optisch abdeckende Stoffe enthält, die besonders im Stufenbereich und hier auch noch im angrenzenden Randbereich und über die volle Fensterdicke D vorgesehen sind. Die Herstellung des Fensters 20 kann z.B. im Spritzguß erfolgt sein.

Figur 3b zeigt raummäßig etwa eine umgekehrte Ausführung, in der die Vertiefung 24 eines Gehäuses 25 nach unten offen ist zur Aufnahme eines Stufenrandes 26 eines Transparentteils 27 eines Fensters 28. Die Schweißwarze 29 ist in diesem Beispiel am Rand der Vertiefung 24 des Gehäuses 25 angebracht. Die Sichtabdeckung 30 ist an dieser dargestellten Stelle von außen auf den Transparentteil 27 im Randbereich aufgebracht, z.B. durch Bedrucken, Bekleben oder Prägen.

Figur 3c zeigt eine ähnliche Ausbildung wie Figur 3a mit einem Gehäuse 31 mit einer nach oben offenen Vertiefung 32 mit Durchbrüchen 33 und einem Transparentteil 34 mit Stufenrand 35 und einem Nietzapfen 36. Das Fenster 37 ist somit mittels Nietens mit dem Gehäuse 31 verbindbar, was schematisch anhand des unverformten und verformten Nietzapfens 36 erkennbar ist. Eine Abdeckung der äußeren Oberfläche des Transparentteils 34 erfolgt im In-Mold-Auftragsverfahren, wobei ein Sichtabdeckfilm 38 hier an der Stelle des Randbereichs und ein Transparentfilm 39 die gesamte Oberfläche abdecken. Das Abdeckverfahren findet in der Spritzgußform statt.

Figur 3d zeigt zwei alternative Stufenausbildungen eines Gehäuses 40, 41 und eines Fensters 46, 47 und eines Stufen-Transparentteils 42 bzw. 43, wobei jeweils auch im Randbereich Abdeckschichten 44 und 45 vorgesehen sind. Die Abdeckschichten können wie in den Beispielen der Figuren 3b und 3c ausgebildet und hergestellt sein. Die Befestigung kann über Einkleben erfolgen.

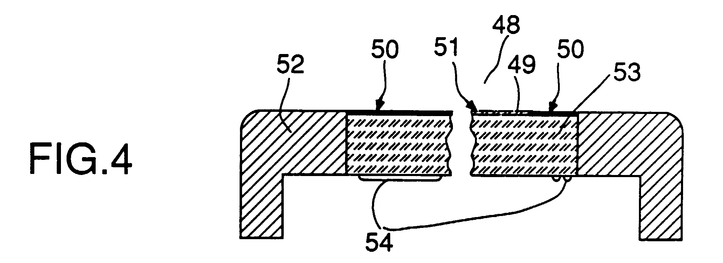

Figur 4 zeigt eine weitere Ausführung mit einem Gehäuse 52 und einem Fenster 48, die im Zweifarbenspritzguß-Verfahren hergestellt sind, wobei das Fenster 48 an der Oberfläche im Druck- und/oder Präge-Verfahren mit einer Schicht 49 überzogen bzw. mit einer Prägeschicht versehen wurde, bestehend aus einem Abdeckfilm 50 und einem Transparentfilm 51. Der Transparentteil ist mit 53 bezeichnet. Eine solche Ausführung kann erforderlich sein, wenn die Zweifarben-Übergänge der Spritzgußteile nicht ganz einwandfrei sind und eine Sichtabdeckung in kritischen Bereichen das Aussehen verbessert.

In oben beschriebenen Ausführungsformen ist es möglich, daß alle Gehäuseteile undurchsichtig oder teilundurchsichtig sind. In diesen Fällen sollte der Sichtabdeckteil entweder eine ähnliche Farbe wie das Gehäuse oder eine Kontrastfarbe dazu aufweisen. Es ist aber auch möglich, daß Gehäuse und Transparentteil transparent und nur der Sichtabdeckteil teilweise oder ganz undurchsichtig sind. Die Form des Ausschnitts im Gehäuse, der z.B. von der Vertiefung für das Fenster umrandet ist, ist in den beschriebenen Beispielen einfachheitshalber rechteckig dargestellt. Es ist jedoch jede Kontur des Ausschnitts, solange das Gehäuseteil noch herstellbar ist, benutzbar, da ja das Fenster in seiner Form im wesentlichen an die Ausschnittskontur oder genauer die Kontur der Fenstervertiefung, soweit vorhanden, angepaßt wird.

Ein Gehäuse mit einer vorgegebenen Ausschnittskontur kann gemäß der Erfindung für eine Vielzahl von Fenstern mit im wesentlichen derselben Außenform, aber unterschiedlichen Sichtabdeckteilen und damit auch unterschiedlichen Transparentteilen benutzt werden, was herstellungsmäßig eine Vereinfachung darstellt und der Designvielfalt alle Möglichkeiten der Unterscheidung von anderen Behältern oder Kassetten bietet.

Insbesondere sind die Schweißwarzen oder -rippen, Nietzapfen und/oder Nietlöcher zweckmäßig am Fenster an der Rückseite des Sichtabdeckteils angeordnet. Im rückseitigen Bereich des Sichtabdeckteils können auch Führungselemente 54 (Figur 4) für das Band und/oder die Bandwickel einer Bandkassette am Fenster ausgebildet sein.

Die Herstellung der Prägung des Fensters zur Ausbildung des Sichtabdeckteils kann im Spritzguß erfolgen.

Ein Behälter mit Sichtfenster besteht im wesentlichen aus einem Gehäuse mit einem daran befestigbarem bzw. damit bei Herstellung verbindbarem Fenster, das einesteils als Transparentteil und anderenteils als Sichtabdeckteil, insbesondere im Randbereich ausgebildet ist. Ein Ziel ist die Abdeckung der Befestigungsstellen. Inbesonders ergibt sich aber der Vorteil eines Einsatzes von Fenstern mit verschiedendsten Sichtabdeckungen für dasselbe Gehäuse, da die Ausschnitts- und Umrißkonturen von Gehäuse und Fenster zumindest im wesentlichen aneinander angepaßt sind.

## Patentansprüche

1. Verfahren zum Herstellen einer Bandkassette (5) mit mindestens einem Sichtfenster (7) unterschiedlicher Größe oder Form das folgende Schritte aufweist
a) Herstellen von identischen Fensterteilen (16, 28, 37, 46-48), die mit Abdeckteilen (10, 11, 13, 13A, 30, 38, 44, 45, 50) versehen sind, die einen transparenten Ausschnitt (14, 26, 27, 34, 39, 42, 43, 53) unterschieldlicher Größe oder Form freigeben,
b) Herstellen von Kassettengehäusen (6, 25, 31, 40, 52) mit identischen Ausschnitten und Befestigungsstellen (P) für Sichtfenster (7, F), wobei die Außenform der Fensterteile (16, 28, 37, 46-48) passend für den Ausschnitt im Kassettengehäuse (6, 25, 31, 40, 52) ausgebildet ist und wobei die Abdeckteile (10, 11, 13, 13A, 30, 38, 44, 45, 50) der Fensterteile (16, 28, 37, 46-48) so angeordnet sind, daß sie nach Einsetzen derselben in die Ausschnitte der Kassettengehäuse (6, 25, 31, 40, 52) über den Befestigungsstellen (P) liegen, so daß letztere optisch abgedeckt sind und
c) Einsetzen und Befestigen der Fensterteile (16, 28, 37, 46-48) in den Ausschnitten und an den Befestigungsstellen (P) der Behältergehäuse (6, 25, 31, 40, 52).

2. Verfahren nach Anspruch 1, dadurch gekennzeichnet, daß das Kassetten-gehäuse undurchsichtig ist und der Fensterteil einen Abdeckteil (10, 11, 13, 13A, 30, 38, 44, 45, 50) aufweist, der eine der Undurchsichtigkeit des Kassetten-gehäuses zumindest ähnliche Undurchsichtigkeit besitzt, so daß der Übergangsbereich zwischen Kassettengehäuse (6, 18, 25, 31, 40, 41, 52) und Fensterteil (7, 20, 28, 37, 46-48) optisch unbestimmt wird.

3. Verfahren nach Anspruch 1 oder 2, dadurch gekennzeichnet, daß der Abdeckteil (10, 11, 13, 13A, 30, 38, 44, 45, 50) zumindest in der Nähe des Außenrandes des Fensterteils (7, 20, 28, 37, 46-48) angeordnet ist.

4. Verfahren nach Anspruch 3, dadurch gekennzeichnet, daß der Abdeckteil (11) zumindest aus Elementen eines rahmenartigen Außenrandes besteht.

5. Verfahren nach Anspruch 3, dadurch gekennzeichnet, daß der Sichtabdeckteil (10, 13, 13A) als Außenrahmen am Fenster (7) ausgebildet ist.

6. Verfahren nach Anspruch 1 und einem der Ansprüche 3 bis 5, dadurch gekennzeichnet, daß der Abdeckteil (10, 11, 13, 13A, 30, 44, 45, 50) mit einer zumindest ähnlichen Farbe wie das des Kassettengehäuses (6, 18, 25, 31, 40, 41, 52) versehen ist.

7. Verfahren nach Anspruch 1 und einem der Ansprüche 3 bis 5, dadurch gekennzeichnet, daß der Abdeckteil (10, 11, 13, 13A, 30, 44, 45, 50) mit einer Kontrastfarbe zur Farbe des Kassettengehäuses (6, 18, 25, 31, 40, 41, 52) ausgebildet ist.

8. Verfahren nach Anspruch 1 oder 2 und einem der Ansprüche 3 bis 7, dadurch gekennzeichnet, daß der Abdeckteil (13, 13A, 30, 38, 44, 45, 50) und der transparente Ausschnitt (14, 23, 27, 34, 42, 43, 53) eine relativ zur Form des Gehäuseausschnitts geometrisch unregelmäßige Form aufweisen.

9. Verfahren nach Anspruch 1 oder 2 und einem der Ansprüche 3 bis 8, dadurch gekennzeichnet, daß der Abdeckteil (10, 11, 13, 13A, 30, 38, 44, 45, 50) und der transparente Ausschnitt(9, 12, 23, 27, 34, 42, 43, 53) eine in bezug auf die Form des Gehäuseausschnitts geometrisch regelmäßige Form besitzen.

10. Verfahren nach Anspruch 1 oder 2 und einem der Ansprüche 3 bis 9, dadurch gekennzeichnet, daß der Fensterteil (20, 48) im Zweifarbenspritzguß hergestellt ist, wobei der Abdeckteil (21, 50) optisch abdeckende Stoffe enthält.

11. Verfahren nach Anspruch 1 oder 2 und einem der Ansprüche 3 bis 9, dadurch gekennzeichnet, daß der Abdeckteil (10, 11, 13, 13A, 30, 44, 45) als Aufdruck auf dem Fensterteil ausgebildet ist.

12. Verfahren nach Anspruch 1 oder 2 und einem der Ansprüche 3 bis 9, dadurch gekennzeichnet, daß der Fensterteil mit einem aufgeprägten Abdeckteil (10, 11, 13, 13A, 30, 44, 45) ausgebildet ist.

13. Verfahren nach Anspruch 1 oder 2 und einem der Ansprüche 3 bis 12, dadurch gekennzeichnet, daß der Fensterteil (37, 48) beim Spritzgußvorgang mit einer vollständigen Bedruckung als Abdeckteil (38, 39 bzw. 50, 49) versehen ist.

14. Verfahren nach Anspruch 1 oder 2 und einem der Ansprüche 3 bis 13, dadurch gekennzeichnet, daß der Fensterteil (28) mittels einer Schweißbefestigung (29) am Kassettengehäuse (25) angebracht ist.

15. Verfahren nach Anspruch 1 oder 2 und einem der Ansprüche 3 bis 13, dadurch gekennzeichnet, daß der Fensterteil (37) mittels einer Nietbefestigung (36) mit dem Kassettengehäuse (31) verbunden ist.

16. Verfahren nach Anspruch 1 oder 2 und einem der Ansprüche 3 bis 13, dadurch gekennzeichnet, daß der Fensterteil (46, 47) mittels einer Klebbefestigung am Kassettengehäuse (40, 41) angebracht ist.

17. Verfahren nach Anspruch 14 oder 15, dadurch gekennzeichnet, daß an der dem Abdeckteil (30, 38) gegenüberliegenden Seite des Fensterteils (20, 37) angeordnete Schweißrippen (29) bzw. Nietzapfen (36) und/oder Nietlöcher vorgesehen sind.

18. Verfahren nach einem der Ansprüche 1 bis 17, dadurch gekennzeichnet, daß an der Rückseite des Abdeckteils (50) am Fensterteil (48) angeordnete Führungsvorsprünge oder -rippen (54) für das in der Bandkassette enthaltene Band vorgesehen sind.

## Claims

1. A method of producing a tape cassette (5) having at least one viewing window (7) of different sizes or shapes, which has the following steps
a) the production of identical window parts (16,28,37,46-48) which are provided with masking parts (10,11,13,13A,30,38,44,45,50) which leave clear a transparent cutout (14,26,27,34,39,42,43,53) of different sizes or shapes,
b) the production of cassette housings (6,25,31,40,52) having identical cutouts and fastening points (P) for viewing windows (7,F) the outer shape of the window parts (16,28,37,46-48) being designed appropriately for the cutout in the cassette housing (6,25,31,40,52), and the masking parts (10,11,13,13A,30,38,44,45,50) of the window parts (16,28,37,46-48) being arranged such that, after insertion of the same into the cutouts of the cassette housings (6,25,31,40,52), they lie over the fastening points (P), so that the latter are optically masked, and,
c) the insertion and fastening of the window parts (16,28,37,46-48) in the cutouts and at the fastening points (P) of the container housings (6,25,31,40,52).

2. The method as claimed in claim 1, wherein the cassette housing is opaque and the window part has a masking part (10,11,13,13A,30,38,44,45,50) which has an opaqueness at least similar to the opaqueness of the cassette housing, so that the transitional region between cassette housing (6,18,25,31,40,41,52) and window part (7,20,28,37,46-48) becomes optically indistinct.

3. The method as claimed in claim 1 or 2, wherein the masking part (10,11,13,13A,30,38,44,45,50) is arranged at least in the vicinity of the outer edge of the window part (7,20,28,37,46-48).

4. The method as claimed in claim 3, wherein the masking part (11) comprises at least elements of a frame-like outer edge.

5. The method as claimed in claim 3, wherein the masking part (10,13,13A) is designed as an outer frame on the window (7).

6. The method as claimed in claim 1 and one of claims 3 to 5, wherein the masking part (10,11,13,13A,30,44,45,50) is provided with an at least similar color to that of the cassette housing (6,18,25,31,40,41,52).

7. The method as claimed in claim 1 and one of claims 3 to 5, wherein the masking part (10,11,13,13A,30,44,45,50) is formed with a contrasting color to the color of the cassette housing (6,18,25,31,40,41,52).

8. The method as claimed in claim 1 or 2 and one of claims 3 to 7, wherein the masking part (13,13A,30,38,44,45,50) and the transparent cutout (14,23,27,34,42,43,53) are of a geometrically irregular shape in relation to the shape of the housing cutout.

9. The method as claimed in claim 1 or 2 and one of claims 3 to 8, wherein the masking part (10,11,13,13A,30,38,44,45,50) and the transparent cutout (9,12,23,27,34,42,43,53) are of a geometrically regular shape with respect to the shape of the housing cutout.

10. The method as claimed in claim 1 or 2 and one of claims 3 to 9, wherein the window part (20,48) is produced by two-color injection molding, the masking part (21,50) containing optically masking substances.

11. The method as claimed in claim 1 or 2 and one of claims 3 to 9, wherein the masking part (10,11,13,13A,30,44,45) is formed as an imprint on the window part.

12. The method as claimed in claim 1 or 2 and one of claims 3 to 9, wherein the window part is formed with an impressed masking part (10,11,13,13A,30,44,45).

13. The method as claimed in claim 1 or 2 and one of claims 3 to 12, wherein the window part (37,48) is provided with a complete print as the masking part (38,39 and 50,49 respectively) during the injection molding operation.

14. The method as claimed in claim 1 or 2 and one of claims 3 to 13, wherein the window part (28) is fitted to the cassette housing (25) by means of a welded fastening (29).

15. The method as claimed in claim 1 or 2 and one of claims 3 to 13, wherein the window part (37) is connected to the cassette housing (31) by means of a riveted fastening (36).

16. The method as claimed in claim 1 or 2 and one of claims 3 to 13, wherein the window part (46,47) is fitted to the cassette housing (40,41) by means of an adhesive fastening.

17. The method as claimed in claim 14 or 15, wherein weld ribs (29) or rivet pins (36) and/or rivet holes, arranged on the side of the window part (20,37) opposite the masking part (30,38), are provided.

18. The method as claimed in one of claims 1 to 17, wherein guide projections or ribs (54), arranged on the rear side of the masking part (50) at the window part (48), are provided for the tape contained in the tape cassette.

## Revendications

1. Procédé de fabrication d'une cassette de bande (5) ayant au moins un voyant (7) de grandeur ou de forme diverse, comprenant les étapes suivantes :
a) fabrication de parties fenêtres identiques (16, 28, 37, 46 à 48) pourvues de parties de couverture (10, 11, 13, 13A, 30, 38, 44, 45, 50) qui dégagent un jour transparent (14, 26, 27, 34, 39, 42, 43, 64) de grandeur ou de forme diverse,
b) fabrication de boîtiers de cassettes (6, 25, 31, 40, 52) ayant des jours identiques et des endroits de fixation (P) pour des voyants (7, F), la forme extérieure des parties fenêtres (16, 28, 37, 46 à 48) étant adaptée au jour du boîtier de cassette (6, 25, 31, 40, 52), et les parties de couverture (10, 11, 13, 13A, 30, 38, 44, 45, 50) des parties fenêtres (16, 28, 37, 46 à 48) étant placées de façon qu'après mise de celles-ci dans les jours des boîtiers de cassettes (6, 25, 31, 40, 52), elles soient situées au-dessus des endroits de fixation (P) afin que ces derniers soient couverts optiquement, et
c) mise et fixation des parties fenêtres (16, 28, 37, 46 à 48) dans les jours et aux endroits de fixation (P) des boîtiers de cassettes (6, 25, 31, 40, 52).

2. Procédé selon la revendication 1, caractérisé par le fait que le boîtier de cassette est opaque et la partie fenêtre présente une partie de couverture (10, 11, 13, 13A, 30, 38, 44, 45, 50) qui a une opacité au moins semblable à celle du boîtier de cassette afin que la zone de transition entre le boîtier de cassette (6, 18, 25, 31, 40, 41, 52) et la partie fenêtre (7, 20, 28, 37, 46 à 48) devienne optiquement indéterminée.

3. Procédé selon l'une des revendications 1 et 2, caractérisé par le fait que la partie de couverture (10, 11, 13, 13A, 30, 38, 44, 45, 50) est placée au moins à proximité du bord extérieur de la partie fenêtre (7, 20, 28, 37, 46 à 48).

4. Procédé selon la revendication 3, caractérisé par le fait que la partie de couverture (11) est constituée au moins d'éléments d'un bord extérieur du genre cadre.

5. Procédé selon la revendication 3, caractérisé par le fait que la partie de couverture à la vue (10, 13, 13A) est constituée d'un cadre extérieur prévu sur la fenêtre (7).

6. Procédé selon la revendication 1 et l'une des revendications 3 à 5, caractérisé par le fait que la partie de couverture (10, 11, 13, 13A, 30, 44, 45, 50) est pourvue d'une couleur au moins semblable à celle du boîtier de cassette (6, 18, 25, 31, 40, 41, 52).

7. Procédé selon la revendication 1 et l'une des revendications 3 à 5, caractérisé par le fait que la partie de couverture (10, 11, 13, 13A, 30, 44, 45, 50) a une couleur contrastant avec celle du boîtier de cassette (6, 18, 25, 31, 40, 41, 52).

8. Procédé selon l'une des revendications 1 et 2 et l'une des revendications 3 à 7, caractérisé par le fait que la partie de couverture (13, 13A, 30, 38, 44, 45, 50) et le jour transparent (14, 23, 27, 34, 42, 43, 53) présentent une forme irrégulière relativement à celle du jour du boîtier.

9. Procédé selon l'une des revendications 1 et 2 et l'une des revendications 3 à 8, caractérisé par le fait que la partie de couverture (10, 11, 13, 13A, 30, 38, 44, 45, 50) et le jour transparent (9, 12, 23, 27, 34, 42, 43, 53) ont une forme régulière par rapport à celle du jour du boîtier.

10. Procédé selon l'une des revendications 1 et 2 et l'une des revendications 3 à 9, caractérisé par le fait que la partie fenêtre (20, 48) est fabriquée par moulage par injection en deux couleurs, la partie de couverture (21, 50) contenant des substances optiquement couvrantes.

11. Procédé selon l'une des revendications 1 et 2 et l'une des revendications 3 à 9, caractérisé par le fait que la partie de couverture (10, 11, 13, 13A, 30, 44, 45) est constituée d'une impression faite sur la partie fenêtre.

12. Procédé selon l'une des revendications 1 et 2 et l'une des revendications 3 à 9, caractérisé par le fait que la partie fenêtre est pourvue d'une partie de couverture gravée (10, 11, 13, 13A, 30, 44, 45).

13. Procédé selon l'une des revendications 1 et 2 et l'une des revendications 3 à 12, caractérisé par le fait que la partie fenêtre (37, 48) est, lors de l'opération de moulage par injection, pourvue d'une impression complète formant partie de couverture (38, 39 ou 50, 49).

14. Procédé selon l'une des revendications 1 et 2 et l'une des revendications 3 à 13, caractérisé par le fait que la partie fenêtre (28) est montée sur le boîtier de cassette (25) au moyen d'une fixation par soudage (29).

15. Procédé selon l'une des revendications 1 et 2 et l'une des revendications 3 à 13, caractérisé par le fait que la partie fenêtre (37) est jointe au boîtier de cassette (31) au moyen d'une fixation par rivetage (36).

16. Procédé selon l'une des revendications 1 et 2 et l'une des revendications 3 à 13, caractérisé par le fait que la partie fenêtre (46, 47) est montée sur le boîtier de cassette (40, 41) au moyen d'une fixation par collage.

17. Procédé selon l'une des revendications 14 et 15, caractérisé par le fait que des nervures à souder (29), des embouts à river (36) et/ou des trous de rivets sont prévus sur la face de la partie fenêtre (20, 37) opposée à la partie de couverture (30, 38).

18. Procédé selon l'une des revendications 1 à 17, caractérisé par le fait que des saillies ou des nervures (54) de guidage de la bande contenue dans la cassette de bande sont prévues sur la partie fenêtre (48) au dos de la partie de couverture (50).
